# DEMANDE DE BREVET EUROPEEN

(11) **EP 4 819 572 A1**
(43) Date de publication de la demande: **07.10.2026**
(21) Numéro de dépôt: 26170045.4
(22) Date de dépôt: 31.03.2026
(51) Int. Cl.: H04L 47/125, H04L 47/50

(54) **QOS HYBRIDE ENTRE LE CPU ET L'ACCÉLÉRATEUR MATÉRIEL**

(30) Priorité: 03.04.2025 FR 2503502
(71) Demandeur: Softathome, 92700 Colombes (FR)
(72) Inventeur: PELLEGRINO, Guillaume, 78300 POISSY (FR)
(74) Mandataire: IPAZ

(57) **Abrégé**

L'invention concerne un procédé de délestage d'un trafic de flux réseau entre un CPU et un accélérateur matériel d'un routeur domestique,
- pour chaque nouveau flux réseau à traiter, vérification si les ressources du CPU sont suffisantes pour traiter tout le trafic réseau,
- si les ressources CPU sont suffisantes, traitement dudit nouveau flux réseau par le CPU avec application d'un algorithme QoS avancé ; cet algorithme QoS avancé étant implémenté de manière logicielle sur le CPU ; ledit traitement étant destiné à traiter l'ensemble des paquets réseaux dudit nouveau flux réseau,
- si les ressources CPU ne sont pas suffisantes, délestage vers l'accélérateur matériel d'au moins un flux réseau parmi un ensemble comprenant ledit nouveau flux et des flux réseaux traités par le CPU.

## Description

### Domaine technique

La présente invention concerne un procédé de délestage d'un trafic de flux réseau entre un CPU et un accélérateur matériel d'un routeur domestique..

### Etat de la technique antérieure

D'une façon générale, dans une architecture réseau, il existe des applications dédiées à la surveillance et gestion de la qualité de service QoS pour « Quality of service » en anglais. Il s'agit de techniques permettant d'assurer une bonne performance du trafic réseau quelles que soient les conditions du réseau.

On connaît des algorithmes de QoS dits avancés tels que CoDel, PI2 ou Fair Queuing, ainsi que leurs implémentations sur CPU telles que Linux FQ-CoDel et CAKE. D'autres algorithmes répandues mais moins performants sont RED ou WRED.

L'algorithme « Fair Queuing » offre une répartition égale de la bande passante entre les différents flux réseaux. Un Flux réseau étant défini par le tuple Adresse IP Source/Port Source/Adresse IP de destination/Port de destination. On assure ainsi que les services de différents utilisateurs sont traités de manière égale. Un service de communication Voix-sur-IP partagera ainsi la bande passante de manière égale à un service Cloud permettant aux deux services de coexister en même temps sans impact important pour l'un ou pour l'autre.

L'algorithme CoDel (RFC8289) offre une adaptation dynamique de la taille des files d'attentes réseaux afin de réduire le temps de latence en cas de congestion réseaux. L'algorithme permet de répondre à la problématique de « bufferbloat » qui se traduit par une taille excessive des files d'attentes réseaux et par conséquent de la latence. L'algorithme apporte une amélioration de la qualité de service comparée à RED. CoDel fait partie de la famille AQM telle que PI2 ou RED.

L'algorithme PI2 répond à la problématique de « bufferbloat » de manière similaire à CoDel.

Néanmoins, une limitation importante à laquelle nous sommes confrontés est que des systèmes embarqués tels que des routeurs résidentiels ne sont pas équipés de CPU suffisamment puissant afin de mettre en œuvre des algorithmes de QoS avancés à des débits réseaux suffisamment élevés (G.Fast : -400Mbps, Fibre : 1Gbps, 10Gbps ou plus).

Afin d'atteindre des débits réseaux suffisants (1Gbps, 10Gbps ou plus), on utilise dans l'état de l'art un accélérateur matériel dédié à la transmission des paquets réseaux. Cet accélérateur matériel vient délester le CPU. La responsabilité du CPU est alors réduite à configurer cet accélérateur matériel, le CPU ne traitant plus que les premiers paquets réseaux avant délestage.

Ces accélérateurs matériels offrent usuellement une qualité de service très réduite comparativement à ce que permet d'offrir une implémentation sur CPU. On peut retrouver dans le commerce des routeurs dont l'accélérateur matériel supporte des algorithmes simple tel que RED ou WRED. Ces accélérateurs ne permettent généralement pas de bénéficier des algorithmes les plus complexes ou avancées ou des dernières avancées algorithmiques du fait de la spécialisation du matériel.

La présente invention a pour objet un nouveau procédé permettant un traitement de qualité de service avancé dans un routeur domestique.

Un autre but de l'invention est d'assurer une qualité de service à très haut débit au sein d'un routeur domestique.

### Exposé de l'invention

On atteint au moins l'un des objectifs précités avec un procédé de délestage d'un trafic de flux réseau entre un CPU (« Central Processing Unit » en anglais) et un accélérateur matériel d'un routeur domestique,
- pour chaque nouveau flux réseau à traiter, vérification si les ressources du CPU sont suffisantes pour traiter tout le trafic réseau,
- si les ressources CPU sont suffisantes, traitement dudit nouveau flux réseau par le CPU avec application d'un algorithme QoS avancé ; cet algorithme QoS avancé étant implémenté de manière logicielle sur le CPU ; ledit traitement étant destiné à traiter l'ensemble des paquets réseaux dudit nouveau flux réseau,
- si les ressources CPU ne sont pas suffisantes, délestage vers l'accélérateur matériel d'au moins un flux réseau parmi un ensemble comprenant ledit nouveau flux et des flux réseaux traités par le CPU.

Par routeur domestique ou résidentiel, on entend un équipement réseau informatique assurant le routage des paquets dans in domicile.

Une QoS classique permet de garantir à certains services (VoIP, IPTV, DNS, ..) identifiables par des caractéristiques connues (Protocole, IP, Port, ..) une priorisation suffisante à leur bon fonctionnement. Avec la multiplication des services (voix, streaming, ..), un opérateur réseaux est en mesure de garantir la priorisation uniquement de ses propres services (Décodeur TV, Téléphone fixe, DNS, ..) mais pas des services tiers (Teams, Discord, Gaming, ..) nécessitant un temps de latence faible. Une QoS avancée permet d'offrir une garantie, une qualité de service égale et partagée à tous les services réseaux, y compris tiers. Elle est généralement implémentée avec FQ-CoDel ou Cake. Un algorithme QoS non avancé est par exemple le SP/WRR.

Un flux réseau peut être identifié par son adresse IP source et son Port source ainsi que son adresse IP destination et son Port de destination.

Avec le procédé selon l'invention, on réalise un délestage du trafic réseau depuis le CPU vers l'accélérateur matériel tout en permettant au CPU de traiter complètement des flux réseau, c'est-à-dire que le CPU ne traite pas uniquement les premiers paquets d'un flux réseau. En effet, dans l'art antérieur, le rôle du CPU était uniquement limité à gérer l'aiguillage des flux réseau vers l'accélérateur matériel ou à traiter simplement quelques paquets du flux réseau. Avec l'invention, hormis le flux réseau délesté, le trafic des autres flux est traité par le CPU, pas uniquement les premiers paquets.

Le procédé selon l'invention permet de tirer partie à la fois du CPU et de l'accélérateur matériel afin d'offrir une qualité de service réseau avancée combinée à un très haut débit réseau.

Il s'agit d'une réalisation hybride car elle combine le traitement de la QoS à la fois sur le CPU ainsi que sur l'accélérateur matériel. Cette hybridation permet d'appliquer des algorithmes de QoS avancés sur le CPU et cela sans sacrifier le débit.

Dans l'art antérieur, les algorithmes avancées sont réservés aux liens faibles débits tel que l'ADSL, la VDSL ou les lignes G.Fast à faible débit du fait des performances limités des processeurs embarqués dans les routeurs résidentiels. En effet, les routeurs domestiques ou résidentiels sont généralement moins puissants Par exemple, un routeur récent (2025) peut posséder un CPU de type ARM, MIPS, ... et ce CPU ne possède généralement pas suffisamment de puissance pour traiter des flux réseaux de 1 Gbps sans délestage matériel. Un tel CPU peut avoir une puissance jusqu'à 2000 BogoMIPS (Million d'instructions par seconde) calculé par le noyau Linux au démarrage, alors qu'un CPU puissant d'un ordinateur personnel peut avoir une puissance à partir de 5000 BogoMIPS. Un CPU peu puisant d'un routeur domestique ou résidentiel peut donc présente une puissance 2,5 à 10 fois inférieur à un CPU puissant d'un ordinateur personnel par exemple.

Avec la présente invention, les flux réseaux ne sont pas accélérés tant que le CPU a les ressources pour les traiter. Et, tous les flux réseaux traités par le CPU bénéficie d'un traitement de QoS Avancé mettant en œuvre des algorithmes avancés. La QoS étant gérée de manière logicielle dans le CPU, elle peut avantageusement bénéficier des dernières avancées algorithmiques.

Selon un mode de réalisation de l'invention, l'algorithme QoS avancé peut comprend au moins l'un des algorithmes suivants : « Fair Queuing », « CoDel », « Cake » ou PI2.

Le « Fair Queuing » est un algorithme de gestion de qualité de service.

Des exemples d'algorithmes de qualité de service avancés sont notamment décrits dans les liens suivants :

fq_codel: "Linux implementation of Fair Queuing (FQ) with Controlled Delay (CoDel)", https://man7.org/linux/man-pages/man8/tc-fq_codel.8.html.

"Fair Queuing": "Scheduling algorithm designed to achieve fairness between flows when a limited bandwidth is shared", https://en.wikipedia.org/wiki/Fair_queuing.

AQM : « Active Queue Management », https://en.wikipedia.org/wiki/Active_queue_management.

CoDel: "Controlled Delay is an Active Queue Management (AQM) algorithm designed to overcome bufferbloat", https://en.wikipedia.org/wiki/CoDel.

CoDel RFC: https://datatracker.ietf.org/doc/html/rfc8289 .

RED/WRED : "(Weighted) Random Early Detection", https://en.wikipedia.org/wiki/Random_early_detection.

"Buffer-Bloat": "High latency and Jitter caused by excessive buffering in case of network congestion", https://en.wikipedia.org/wiki/Bufferbloat.

Selon un mode de réalisation de l'invention, le trafic est haut débit avec par exemple un débit supérieur ou égal à 400 Mbps.

A titre d'exemples, le trafic réseau peut être selon un protocole G.Fast ( à environ 400Mbps), Ethernet/Fibre (1Gbps, 10Gbps, 25Gbps, ou plus ) ou réseau mobile (4G, 5G, ou plus), ou autres.

Selon un mode de réalisation de l'invention, les flux traités par le CPU peuvent avoir une priorité supérieure à celles des flux traités par l'accélérateur matériel.

Selon une caractéristique avantageuse de l'invention, le flux réseau à délester peut être déterminé comme étant un flux réseau ayant le plus haut débit du client ayant le plus grand débit cumulé.

Par client on entend un appareil identifié par son adresse IP source ou son adresse MAC.

Avec le procédé selon l'invention, on identifie les clients réseaux utilisant des flux haut débit, comme par exemple le protocole torrent, afin de pouvoir les traiter dans l'accélérateur matériel et délester le CPU.

Cela permet en l'occurrence de laisser les flux réseaux de faible à moyen débit, de type Voix-sur-IP, Vidéo-Conférence, Jeux-Vidéo en Ligne, Web, ..., être traités sur le CPU et bénéficier de fonctionnalités avancés de QoS tandis que les flux très haut débit bénéficie de l'accélération matériel permettant d'atteindre le très haut débit.

Avantageusement, on peut répéter l'étape de délestage du flux réseau ayant le plus haut débit du client ayant le plus grand débit cumulé tant que les ressources du CPU ne sont pas suffisantes pour traiter le trafic non délesté.

En effet, dans un soucis d'équité entre les services et les utilisateurs, on peut prévoir de délester les flux et les clients consommant le plus de débit vers l'accélérateur en premier quand que le CPU n'a plus suffisamment de ressources pour gérer tout le trafic réseau. On peut ainsi délester sur l'accélérateur matériel les flux de plus haut débit des clients cumulant le plus de débit lorsque le CPU atteint ses limites de ressources.

En d'autres termes, on sélectionne le client qui consomme le plus de débit, on sélectionne dans ce client le flux qui consomme le plus, et on le déleste dans l'accélérateur matériel. On répète l'opération jusqu'à ce que le CPU ne soit plus saturé.

Selon une caractéristique avantageuse de l'invention, l'étape de vérification peut comprendre les étapes suivantes :
- mesure de débit dudit nouveau flux,
- mesure de débit cumulé d'un client associé audit nouveau flux,
- mesure de débit cumulé total passant par le CPU,
- vérification si le débit cumulé total passant par le CPU est supérieure à une limite prédéfinie,
et en ce que l'étape de délestage comprend une étape de détermination du flux réseau à délester en comparant le débit cumulé total passant par le CPU avec une limite prédéfinie.

Selon une caractéristique avantageuse de l'invention, l'étape de vérification peut comprendre les étapes suivantes :
- mesure de débit de chaque flux,
- mesure de débit cumulé de chaque client connecté au routeur,
- mesure de débit cumulé total passant par le CPU,
- identification de l'usage CPU de tâches noyaux impliquées dans le traitement des paquets réseaux,
- calcul d'une limite à partir du débit cumulé de chaque client connecté au routeur, du débit cumulé total et de l'usage CPU de tâches noyaux impliquées dans le traitement des paquets réseaux,
et l'étape de délestage peut comprendre une étape de détermination du flux réseau à délester en comparant le débit mesuré de chaque flux réseau avec ladite limite.

En particulier, l'étape de comparaison du débit mesuré de chaque flux réseau avec ladite limite peut être implémentée à partir des règles iptables sur linux ou en développant une extension iptable dédiée.

On eut ainsi simplement utiliser des règles iptables sur Linux. L'extension iptables hashlimit est particulièrement approprié pour cet usage.

Selon une autre caractéristique avantageuse de l'invention:
- l'étape de vérification peut comprendre une étape pour contrôler le débit cumulé total sur le CPU, et
- l'étape de délestage peut comprendre une détermination du flux réseau à délester lorsque ce débit cumulé total dépasse un seuil prédéterminé.

Dans ce cas, on contrôle le débit cumulé total sur le CPU. Si le débit cumulé total dépasse la capacité de traitement du CPU alors on identifie le flux ayant le plus haut débit parmi le client ayant le plus haut débit. Ce flux est alors délesté vers l'accélérateur matériel. On recommence l'opération jusqu'à ce que le débit cumulé total sur le CPU repasse sous un seuil prédéterminé acceptable.

Le seuil prédéterminé peut être une valeur de la capacité de traitement du CPU.

Par exemple, dans un routeur linux, l'étape pour contrôler le débit cumulé total sur le CPU est réalisée en contrôlant une table des statistiques des connections réseaux dans le routeur linux.

En effet, avec un routeur Linux, le procédé selon l'invention peut être implémenté dans un fil d'exécution dédié dont le rôle est de monitorer la table des statistiques des connections réseaux.

Avec un tel arrangement :
- le débit cumulé total passant par le CPU ne dépasse jamais la capacité de traitement du CPU,
- les clients réseaux sont traités de manière équitable : seuls les clients consommant le plus de débit ont un risque de se faire délester sur l'accélération matériel avec une priorité réduite, et
- les services (flux réseaux) d'un même client sont traités de manière équitable : seuls les flux consommant le plus de débit ont un risque de se faire délester sur l'accélération matériel avec une priorité réduite.

Selon un autre aspect de l'invention, il est proposé un routeur équipé d'un CPU et d'un accélérateur matériel. Ce routeur comprend une unité de traitement configuré pour mettre en œuvre le procédé selon l'invention.

Ladite unité de traitement peut être ledit CPU ou tout autre composant intelligent du routeur.

Il est également prévu un produit programme d'ordinateur comprenant des instructions qui, lorsque le programme est exécuté par une unité de traitement, conduisent cette unité de traitement à mettre en œuvre les étapes du procédé selon l'invention.

### Description des figures et modes de réalisation

D'autres avantages et particularités de l'invention apparaîtront à la lecture de la description détaillée de mises en œuvre et de modes de réalisation nullement limitatifs, et des dessins annexés suivants :
La figure 1 est une vue schématique d'une maison comprenant un point d'accès sous la forme d'une passerelle domestique;
La figure 2 est un organigramme illustrant des étapes du procédé selon l'invention,
La figure 3 est une vue schématique illustrant la mise en œuvre d'un procédé selon l'invention dans un routeur de type passerelle domestique,
La figure 4 est une vue schématique illustrant un traitement de QoS avancé sur un CPU,
La figure 5 est une vue schématique illustrant un procédé de délestage par calcul de débit selon l'invention,
La figure 6 est une vue schématique illustrant un procédé de délestage par lecture d'une table des statistiques des connections réseaux selon l'invention, et
La figure 7 est une vue schématique illustrant un procédé de délestage par comparaison avec une limite prédéfinie selon l'invention.

Les modes de réalisation qui seront décrits dans la suite ne sont nullement limitatifs ; on pourra notamment mettre en œuvre des variantes de l'invention ne comprenant qu'une sélection de caractéristiques décrites par la suite isolées des autres caractéristiques décrites, si cette sélection de caractéristiques est suffisante pour conférer un avantage technique ou pour différencier l'invention par rapport à l'état de la technique antérieur. Cette sélection comprend au moins une caractéristique de préférence fonctionnelle sans détails structurels, ou avec seulement une partie des détails structurels si cette partie uniquement est suffisante pour conférer un avantage technique ou pour différencier l'invention par rapport à l'état de la technique antérieur.

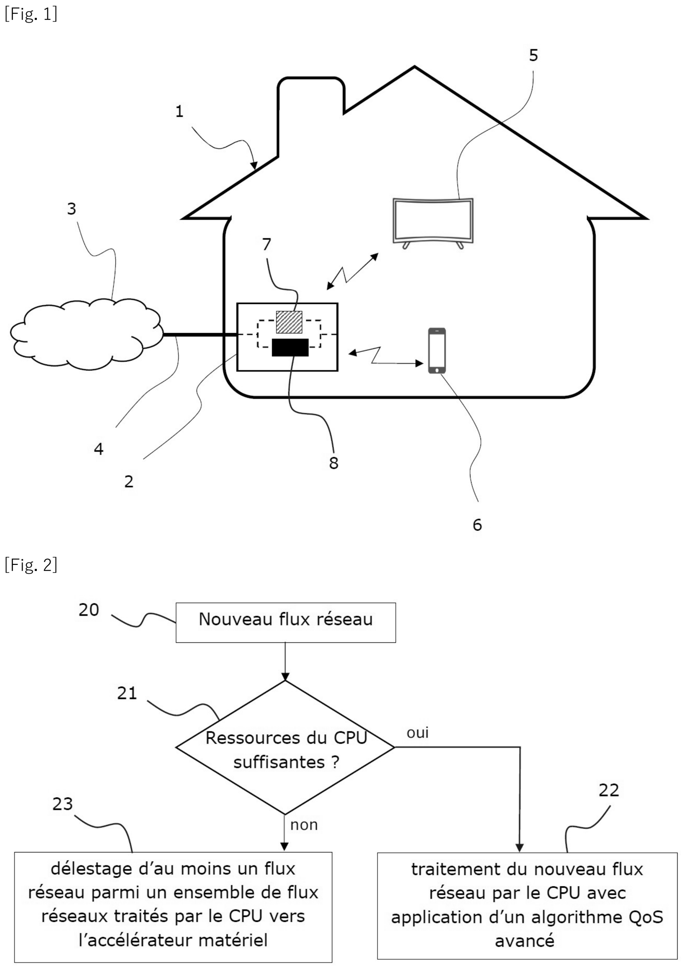

La figure 1 est une vue schématique illustrant une maison 1 équipée d'un point d'accès 2 qui est un routeur domestique ou passerelle permettant d'accéder à internet 3 via une liaison filaire 4 à base de câble coaxial ou de fibre optique.

Des équipements de la maison peuvent se connecter de façon filaire ou sans fil au point d'accès 2 pour accéder à internet 3. Dans l'exemple de la figure 1, on distingue un téléviseur 5 et un téléphone portable 6 de type « smartphone ». Lorsque le téléviseur 5 est en marche, un service de télévision numérique est notamment activé entre le téléviseur 5 et le routeur 2. Le téléphone portable peut se connecter au routeur pour accéder à internet sur la base de différents types de services : web, téléchargement, téléphonie,...

Le routeur 2 est un équipement réseau informatique qui assure le routage des paquets de données. Les paquets d'un même service constituent un flux réseau qui est identifiable par son adresse IP source, son Port source, son adresse IP de destination et son Port de destination.

Le routeur 2 peut être connecté, d'un coté à un réseau local LAN pour « Local Area Network » en anglais auquel peuvent être connectés les appareils de la maison. De l'autre côté, le routeur 2 est connecté au réseau externe, internet 3, qui est un réseau WAN pour « Wide Area Network » en anglais. Le réseau local désigne toute installation informatique interconnecté au sein du domicile de l'utilisateur comme par exemple, des ordinateurs, une télévision, une tablette, un téléphone portable ou encore une console de jeux. Le contexte du réseau local domestique est à titre d'exemple. Le procédé selon la présente invention est applicable à d'autres types de réseaux de communication avec ou sans fil, par exemple à un réseau universitaire, aux réseaux d'entreprises, etc.

Sur la figure 1, le téléviseur 5 et le téléphone portable 6 peuvent générer chacun un ou plusieurs flux réseau à travers le routeur 2.

L'ensemble comprenant le routeur 2, le téléviseur 5 et le téléphone portable 6 forme le réseau LAN.

Le routeur 2 comprend des moyens matériels et logiciels conventionnels pour servir de point d'accès entre des stations ou dispositifs de la maison et internet. Le routeur 2 comprend en outre un produit programme d'ordinateur pour mettre en œuvre le procédé selon l'invention.

Le routeur 2 comprend une unité de traitement 7, tel un CPU ou microprocesseur par exemple, pour mettre en œuvre le procédé selon l'invention ; un accélérateur matériel 8 pour traiter des flux réseau à très haut débit.

Dans l'art antérieur, le CPU sert uniquement à gérer les premiers paquets d'un flux réseau, les autres paquets étant traités par l'accélérateur matériel.

Dans la présente invention, tout flux traité par le CPU est traité de bout en bout de sorte qu'un algorithme de qualité de service avancé peut être appliqué aux flux traités par le CPU.

L'invention a notamment pour objet la surveillance des ressources du CPU 7 et de diriger les flux les plus consommatrices de bande passante vers l'accélérateur matériel uniquement lorsque les ressources du CPU ne sont pas suffisantes.

Comme on le voit sur la figure 2, lorsqu'un nouveau flux réseau 20 doit être traité par le routeur 2, on vérifie à l'étape 21, si les ressources du CPU 7 sont suffisantes. Dans l'affirmative, le CPU traite l'ensemble du trafic y compris le nouveau flux réseau et on applique des algorithmes QoS avancés pour améliorer la qualité de service du trafic.

Lorsque les ressources du CPU ne sont pas suffisantes, on déleste à l'étape 23, au moins un flux réseau, pas forcément le nouveau flux, vers l'accélérateur matériel 8.

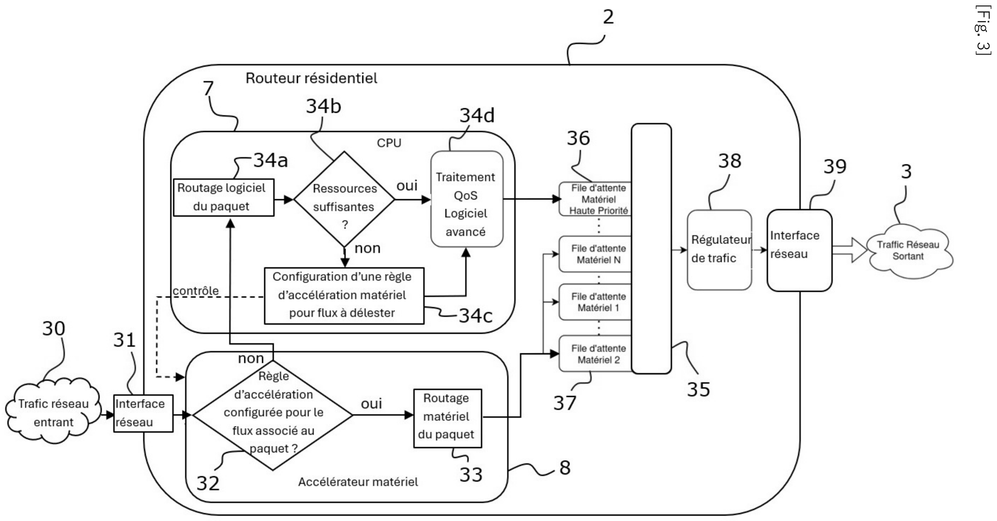

Sur la figure 3, on voit plus en détail des composants internes d'un routeur 2 pour la mise en œuvre du procédé selon l'invention. Des étapes de l'invention sont également représentées sur cette figure 3.

Le trafic réseau 30 peut être le trafic provenant des stations à l'intérieur de la maison et transitant via un réseau local LAN. Ce trafic passe par l'interface réseau 31 qui est l'interface d'entrée du routeur 2. Chaque paquet du trafic subit une vérification dans l'accélérateur matériel 8. A l'étape 32, on vérifie si une règle d'accélération existe pour le flux associé au paquet provenant de l'interface 31. Une telle règle dicte à l'accélérateur matériel comment traiter/router le paquet. Si une telle règle existe, l'accélérateur peut donc mettre en œuvre le routage matériel 33 consistant à traiter le paquet en toute indépendance, en contournant le CPU. Si la règle n'existe pas, l'accélérateur est contraint de remonter le paquet au CPU pour un routage logiciel 34a. Le CPU 7 peut ensuite décider d'ajouter une règle d'accélération ou non pour les prochains paquets du flux associé.

Pour ce faire, le CPU 7 est configuré pour vérifier à l'étape 34b sir les ressources CPU sont suffisantes pour traiter le nouveau flux en complément notamment de flux déjà en cours de traitement. Si la réponse est « non », alors on configure à l'étape 34c une règle d'accélération matériel pour délester un flux. Le paquet en cours est traité par le CPU. Une boucle de contrôle permet de transmettre la règle configurée vers l'accélérateur matériel 8.

Si la réponse est oui, le paquet en cours et le flux réseau associé sont traités dans le CPU avec d'éventuels flux réseau déjà en traitement dans le CPU. On applique un traitement QoS avancé à l'étape 34d. Les flux réseau sortant du CPU sont pris en charge par une ou plusieurs files d'attente matérielles 36 avec une haute priorité. Les flux réseau traités par l'accélérateur matériel 8 sont pris en charge par plusieurs files d'attente matérielles 37 avec des niveaux de priorité inférieurs à la haute priorité.

On utilise un ordonnanceur 35 pour gérer les files d'attente 36 et 37.

Une mise en forme du trafic est réalisé par le régulateur de trafic 38 en sortie de l'ordonnanceur 35. Cette mise en forme permet de gérer la bande passante en contrôlant des paquets des flux réseau. Cela permet de garantir les performances du réseau en fonction des priorités.

Les flux réseau transitent via l'interface de réseau 39 vers internet 3 en tant que trafic réseau sortant.

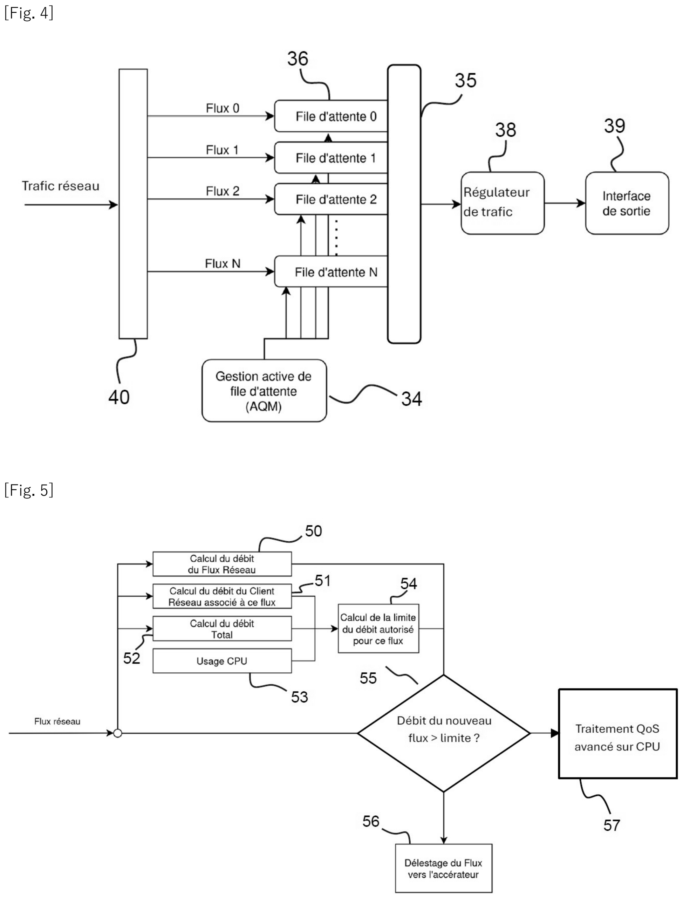

La figure 4 est une illustration d'un traitement de QoS avancé sur CPU. Le trafic réseau entrant est détecté par un traqueur de connections 40 qui peut être un module du CPU, éventuellement associé au traitement QoS avancé.

Dans l'exemple de la figure 4, N+1 flux réseau ont été identifiés par le traqueur de connections 40. Chaque flux réseau Flux 0, Flux 1,... Flux N, est géré par une file d'attente associée : File d'attente 0, File d'attente 1, ... et File d'attente N.

Le traitement de QoS avancé 34 met en œuvre un algorithme de gestion de file d'attente (AQM pour « Active Queue Management » en anglais). Les différentes files d'attente sont ensuite traitées par le régulateur de trafic 38 avant d'alimenter l'interface de sortie 39.

Le délestage peut être mis en œuvre de différentes manières.

On prévoit une première mise en œuvre dans laquelle le choix du flux réseau à délester est réalisé en calculant une limite de débit autorisé pour le nouveau flux réseau. La figure 5 illustre un tel mode de réalisation dans lequel un nouveau flux réseau entrant est capté pour :
- calculer à l'étape 50 le débit de ce nouveau flux réseau,
- calculer à l'étape 51 le débit du client réseau associé à ce nouveau flux réseau,
- calculer à l'étape 52 le débit cumulé total, il s'agit du débit total du trafic traité par le CPU y compris le nouveau flux, et
- déterminer à l'étape 53 l'usage CPU de tâches noyaux impliquées dans le traitement des paquets réseaux.

Par exemple, si le temps d'usage de ces tâches s'approche de 100% du temps de CPU disponible, alors c'est un indicateur qu'une limite est atteinte et qu'il est nécessaire de procéder à un délestage.

Ensuite, à partir du débit du client réseau calculé, du débit cumulé total calculé et de l'usage CPU, on détermine à l'étape 54 une limite du débit autorisé pour le nouveau flux réseau.

Une elle limite peut être déterminée en utilisant iptables avec des opérations de comparaisons suivantes: 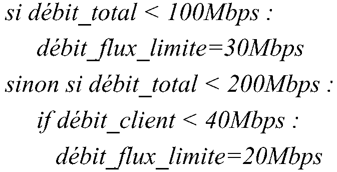 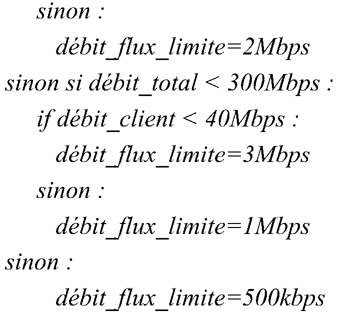 Pour un calcul plus avancé, un module kernel dédié peut être utilisé. Un autre algorithme qui permettrait d'adapter de manière linéaire la limite de débit par flux en fonction du débit cumulé total et du débit du client peut être le suivant: $d é bit _ max = 300 Mbps$ $d é bit _ total _ ratio = d é bit _ total / d é bit _ max$ $d é bit _ client _ ratio = d é bit _ client / d é bit _ max$ 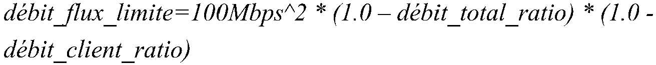 débit_flux_limite=100Mbps^2 * (1.0 - débit_total_ratio) * (1.0 - débit_client_ratio)

Le calcul de la limite du débit autorisé prend en compte le fait que :
- cette limite peut rester haute tant que le débit cumulé total est loin de la capacité maximale du CPU,
- la limite doit s'approcher de 0 quand le débit cumulé total s'approche de la capacite maximale du CPU, et
- la limite doit être réduite si le débit cumulé total du client associé au nouveau flux réseau est élevé dans un soucis d'équité entre les clients.

En d'autres termes, si un premier client utilise la bande passante de manière plus agressive qu'un autre client, on favorise le délestage matériel des flux de ce premier client, en réduisant la limite du débit autorisé par flux pour ce premier client. Le raisonnement est qu'un client A ouvrant 8 flux de10Mbps devrait être plus pénalisé qu'un client B ouvrant 1 seul flux de 20Mbps.

A l'étape 55, on vérifie si le débit du flux réseau calculé à l'étape 50 est supérieur à la limite calculée pour un nouveau flux. Dans l'affirmative, on déleste à l'étape 56 le nouveau flux réseau vers l'accélérateur matériel. Dans la négative, le nouveau flux réseau est traité à l'étape 57 par le CPU et on applique un traitement QoS avancé.

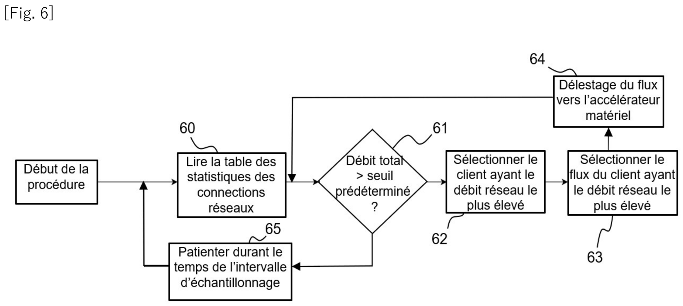

On prévoit également une deuxième mise en œuvre dans laquelle le choix du flux réseau à délester est réalisé en lisant une table des statistiques des connections réseaux. La figure 6 illustre un tel mode de réalisation dans lequel, à intervalle régulier, on vient lire la table des statistiques des connections réseaux à l'tape 60.

A l'étape 61, on vérifie si le débit cumulé total passant par le CPU est supérieur à un seuil prédéterminé. Dans l'affirmative, on sélectionne le client ayant le débit réseau le plus élevé à l'étape 62. Puis à l'étape 63, on sélectionne le flux réseau du client ayant le débit réseau le plus élevé. A l'étape 64, on déleste ce flux réseau ainsi sélectionné vers l'accélérateur matériel et on répète les étapes 61 à 64 jusqu'à ce que le débit cumulé total passant par le CPU soit inférieur au seuil prédéterminé. Dans ce cas, on patient à l'étape 65 durant un temps correspondant à l'intervalle d'échantillonnage, c'est-à-dire qu'on attend la prochaine lecture de la table des statistiques des connections réseaux.

Avec un tel mode de réalisation, seuls les clients consommant le plus de débit ont un risque de se faire délester sur l'accélération matériel avec une priorité réduite. Et seuls les flux réseau consommant le plus de débit ont un risque de se faire délester sur l'accélération matériel avec une priorité réduite.

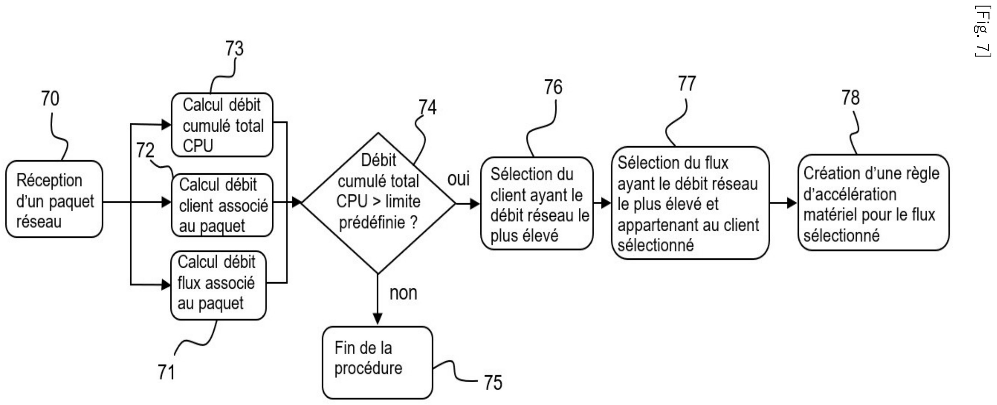

Sur la figure 7, on distingue un mode de réalisation dans lequel on reçoit à l'étape 70 un paquet d'un nouveau flux (le calcul est fait pour chaque paquet de tous les flux ou pour les premiers ou le premier paquet d'un nouveau flux). La réception du paquet réseau peut se faire de différentes façons comme par exemple un « hook » iptables implémenté dans un module noyau Linux. A l'étape 71, on calcule le débit du flux associé au paquet en cours. A l'étape 72, on calcule le débit du client associé au paquet en cours. Et à l'étape 73 on calcule le débit cumulé total passant par le CPU. Les trois étapes 71 à 73 peuvent être réalisées en parallèle ou en série.

A l'étape 74, on vérifie si le débit cumulé total passant par le CPU est supérieur à une limite prédéfinie. Cette limite prédéfinie peut par exemple être à deux tiers de la capacité max du CPU. Pour une capacité CPU de 300Mpbs par exemple, on peut définir une limite à 200 Mbps afin de conserver une marge pour l'usage CPU de tâches noyaux impliquées dans le traitement des paquets réseaux. Dans la négative lors de la vérification à l'étape 74, on met fin à la procédure à l'étape 75. Dans l'affirmative, On sélectionne à l'étape 76 le client ayant le débit réseau le plus élevé. Cette étape est optionnelle. On sélectionne ensuite à l'étape 77 le flux ayant le débit réseau le plus élevé appartenant au client sélectionné. Puis on crée une règle d'accélération matériel pour le flux sélectionné.

Le tableau ci-dessous illustre les avantages apportés à la Qualité de Service:

| Services | Qualité de service exigé | Location de la QoS | Qualité de service rendu par l'invention |
|---|---|---|---|
| Voix-sur-IP | Flux Faible latence et débit faible à moyen (<50Mbps) | CPU | Très faible latence, Ordonnancement équitable entre les flux, priorité élevée par rapport aux flux très haut débits. |
| Vidéo-Conférence HD | | | |
| Jeux Multi-joueurs (ex : FPS, RPG, MMO, RTS) | | | |
| Téléchargement haut débit depuis ou vers un serveur | Flux à Latence élevée et débit élevé [500Mbps, 10 Gbps+] | Accélérateur Matériel | Latence élevée, Très haut débit, Priorité réduite |
| Partage haut débit de fichiers Pair-à-Pair (Torrent). | Nombreux Flux à Latence élevée et débit important [100Mbps, 10Gbps+] | Accélérateur Matériel | Latence élevée, Très haut débit, Priorité réduite |

A titre d'exemple, un mode de réalisation du procédé selon l'invention peut se concrétiser de la manière suivante :

Aline passe un appel vidéo via un service Web (Teams, Google Meet, Discord, ..). Pendant ce temps, Tom a démarré le téléchargement de ses dernières photos et vidéos vers son service Cloud.
1. Si le routeur résidentiel d'Aline et Tom utilise une QoS basique implémentée dans l'accélérateur matériel, le service vidéo risque d'être impacté (freeze, lags, ..) par le service Cloud par manque de priorisation.
2. Si le routeur résidentiel d'Aline et Tom utilise une QoS avancée implémentée de manière logicielle sur le CPU, le service Cloud peut être impacté par le manque de débit.
3. Si le routeur utilise une QoS Hybride selon l'invention, l'appel vidéo d'Alice sera priorisé tandis que le téléchargement de Tom bénéficiera d'un service très haut débit.

Deux situations sont possible :
- le débit du téléchargement vers le Cloud demande plus de ressources que le CPU ne possède : le trafic d'Aline est alors traité sur le CPU avec une priorité importante tandis que le trafic de Tom est traité sur l'accélérateur matériel avec une priorité réduite.
- le CPU possède suffisamment de ressources pour traiter les deux flux réseaux. Les services de Tom et Aline sont tous les deux traités sur le CPU où chacun bénéficie d'une part égale de la bande passante ainsi que des bénéfices d'AQM qui réduit la latence en cas de congestion réseaux.

En conclusion, le procédé de délestage du trafic réseau selon l'invention, permet ainsi de délester sur l'accélérateur les flux et les clients utilisant un débit trop élevé.

On a ainsi réalisé une QoS Hybride entre le CPU et l'accélérateur matériel. Cela offre une qualité de service élevée grâce à l'application d'un algorithme QoS avancé sur le CPU combiné à un très haut débit rendu possible par l'accélération matérielle.

Bien entendu, l'invention n'est pas limitée aux exemples qui viennent d'être décrits. De nombreuses modifications peuvent être apportées à ces exemples sans sortir du cadre de la présente invention telle que décrite.

## Revendications

1. Procédé de délestage d'un trafic de flux réseau entre un CPU et un accélérateur matériel d'un routeur domestique,
- pour chaque nouveau flux réseau à traiter, vérification si les ressources du CPU sont suffisantes pour traiter tout le trafic réseau,
- si les ressources CPU sont suffisantes, traitement dudit nouveau flux réseau par le CPU avec application d'un algorithme QoS avancé ; cet algorithme QoS avancé étant implémenté de manière logicielle sur le CPU ; ledit traitement étant destiné à traiter l'ensemble des paquets réseaux dudit nouveau flux réseau,
- si les ressources CPU ne sont pas suffisantes, délestage vers l'accélérateur matériel d'au moins un flux réseau parmi un ensemble comprenant ledit nouveau flux et des flux réseaux traités par le CPU ; une partie dudit ensemble restant traitée par le CPU.

2. Procédé selon la revendication 1, **caractérisé en ce que** l'algorithme QoS avancé comprend au moins l'un des algorithmes suivants : Fair Queuing, CoDel, Cake ou PI2.

3. Procédé selon la revendication 1 ou 2, **caractérisé en ce que** le trafic est haut débit supérieur ou égal à 400 Mbps.

4. Procédé selon la revendication 3, **caractérisé en ce que** le trafic réseau selon un protocole G.Fast, Ethernet/Fibre ou réseau mobile.

5. Procédé selon l'une quelconque des revendications précédentes, **caractérisé en ce que** les flux traités par le CPU ont une priorité supérieure à celles des flux traités par l'accélérateur matériel.

6. Procédé selon l'une quelconque des revendications précédentes, **caractérisé en ce que** le flux réseau à délester est déterminé comme étant un flux réseau ayant le plus haut débit du client ayant le plus grand débit cumulé.

7. Procédé selon la revendication 6, **caractérisé en ce qu'**on répète l'étape de délestage du flux réseau ayant le plus haut débit du client ayant le plus grand débit cumulé tant que les ressources du CPU ne sont pas suffisantes pour traiter le trafic non délesté.

8. Procédé selon l'une quelconque des revendications précédentes, **caractérisé en ce que** l'étape de vérification comprend les étapes suivantes :
- mesure de débit dudit nouveau flux,
- mesure de débit cumulé d'un client associé audit nouveau flux,
- mesure de débit cumulé total passant par le CPU,
- vérification si le débit cumulé total passant par le CPU est supérieure à une limite prédéfinie,
et **en ce que** l'étape de délestage comprend une étape de détermination du flux réseau à délester en comparant le débit cumulé total passant par le CPU avec une limite prédéfinie.

9. Procédé selon l'une quelconque des revendications 1 à 7, **caractérisé en ce que** l'étape de vérification comprend les étapes suivantes :
- mesure de débit de chaque flux,
- mesure de débit cumulé de chaque client connecté au routeur,
- mesure de débit cumulé total passant par le CPU,
- identification de l'usage CPU de tâches noyaux impliquées dans le traitement des paquets réseaux,
- calcul d'une limite à partir du débit cumulé de chaque client connecté au routeur, du débit cumulé total et de l'usage CPU de tâches noyaux impliquées dans le traitement des paquets réseaux,
et **en ce que** l'étape de délestage comprend une étape de détermination du flux réseau à délester en comparant le débit mesuré de chaque flux réseau avec ladite limite.

10. Procédé selon la revendication 8 ou 9, **caractérisé en ce que** l'étape de comparaison du débit mesuré de chaque flux réseau avec ladite limite est implémentée à partir des règles iptables sur linux ou en développant une extension iptable dédiée.

11. Procédé selon l'une quelconque des revendications 1 à 7, **caractérisé en ce que** :
- l'étape de vérification comprend une étape pour contrôler le débit cumulé total sur le CPU, et
- l'étape de délestage comprend une détermination du flux réseau à délester lorsque ce débit cumulé total dépasse un seuil prédéterminé.

12. Procédé selon la revendication 11, **caractérisé en ce que** le seuil est une valeur de capacité de traitement du CPU.

13. Procédé selon la revendication 11 ou 12, **caractérisé en ce que** dans un routeur linux, l'étape pour contrôler le débit cumulé total sur le CPU est réalisée en contrôlant une table des statistiques des connections réseaux dans le routeur linux.

14. Routeur équipé d'un CPU et d'un accélérateur matériel, **caractérisé en ce qu'**il comprend une unité de traitement configuré pour mettre en œuvre le procédé selon l'une quelconque des revendications 1 à 13.

15. Produit programme d'ordinateur comprenant des instructions qui, lorsque le programme est exécuté par une unité de traitement, conduisent cette unité de traitement à mettre en œuvre les étapes du procédé selon l'une quelconque des revendications 1 à 13.
